# FASCICULE DE BREVET EUROPEEN

(11) **EP 1 862 945 B1**
(45) Date de publication et mention de la délivrance du brevet: **08.04.2009**
(21) Numéro de dépôt: 06011474.1
(22) Date de dépôt: 02.06.2006
(51) Int. Cl.: G06K 19/07

(54) **Dispositif d'identification électronique ou transpondeur muni de deux antennes accordées à des fréquences différentes**
Electronic identification device or transponder fitted with two antennas tuned to different frequencies
Elektronische Identifikationsvorrichtung oder Transponder, ausgerüstet mit zwei auf unterschiedliche Frequenzen abgestimmten Antennen

(43) Date de publication de la demande: 05.12.2007
(73) Titulaire: EM Microelectronic-Marin SA, 2074 Marin (CH)
(72) Inventeur: Roz, Thierry, 2208 Les Hauts-Geneveys (CH)
(74) Mandataire: Surmely, Gérard

(56) Documents cités:
- WO-A-20/04015625
- WO-A2-01/95242
- WO-A2-01/95243
- GB-A- 2 119 141
- US-A1- 2004 066 280
- US-A1- 2004 066 752
- US-A1- 2005 156 709

## Description

La présente invention concerne un dispositif d'identification électronique ou transpondeur comprenant deux antennes accordées respectivement à une première fréquence et à une deuxième fréquence. En particulier, l'invention concerne de tels dispositifs agencés pour recevoir une énergie d'activation par l'intermédiaire d'un signal d'interrogation fourni par un lecteur à la première fréquence et pour répondre à la deuxième fréquence de préférence supérieure à ladite première fréquence. Dans le cas de la présente description, le terme "réponse" signifie l'envoi d'un signal codé comprenant notamment un code d'identification suite à la réception d'une commande d'un lecteur ou simplement suite à la réception d'un champ d'activation à ladite première fréquence fournie par un lecteur.

Pour l'identification de personnes ou d'animaux en particulier, il est connu d'utiliser des dispositifs d'identification électroniques passifs ou transpondeurs passifs qui reçoivent un signal d'interrogation d'un lecteur. Par signal d'interrogation, on comprend soit une commande codée ou simplement l'émission d'un champ d'activation pour les transpondeurs passifs présents dans une région de communication propre au lecteur. Le transpondeur tire de ce signal d'interrogation l'énergie nécessaire à son fonctionnement via un circuit redresseur bien connu de l'homme du métier. Dans un premier mode de réalisation simple, le transpondeur répond dès qu'il a reçu l'énergie d'activation suffisante en modulant le signal d'interrogation par une variation de son facteur de qualité. Ainsi, dans ce premier mode, les transpondeurs envoient un signal de réponse en modulant le signal d'interrogation. Le lecteur doit donc être agencé de manière à pouvoir détecter la modulation effectuée par le transpondeur sur le signal qu'il émet lui-même. Cette détection n'est pas aisée étant donné que l'antenne émettrice doit être associée à des moyens permettant de détecter une variation d'impédance pour l'antenne émettrice. Il est donc difficile d'obtenir de tels lecteurs ayant une très bonne sensibilité.

Dans un deuxième mode de réalisation plus évolué, notamment lorsqu'un protocole d'anticollision géré par le lecteur est prévu, les transpondeurs ont également un démodulateur permettant de détecter au moins une commande codée dans le signal d'interrogation.

Des systèmes fonctionnant selon les deux modes de réalisation susmentionnés ont été vendus et installés en grand nombre, en particulier pour l'identification d'animaux dans la production animalière, En général, ces systèmes fonctionnent à basse fréquence, par exemple 125 kHz. La demande pour des transpondeurs de ce type demeure importante étant donné le grand nombre de systèmes d'identification d'objets, d'animaux ou de personnes installés qui fonctionnent à basse fréquence et notamment à cette fréquence de 125 kHz.

On notera que des variantes à cette première génération de système d'identification ont été proposées, en particulier dans le document US 2005/0156709. Ce document propose d'agencer dans le transpondeur un circuit passif réfléchissant le signal d'interrogation en le modulant et un circuit actif émettant à la même fréquence et permettant de communiquer à plus longue distance. La sélection du mode de fonctionnement actif ou passif est notamment en fonction de la puissance du signal d'interrogation reçu par le transpondeur. Cette sélection peut aussi être faite par le signal d'interrogation.

Pour répondre au problème de la première génération de système lecteur-transpondeur susmentionné, une autre génération de système a été proposée, notamment dans les documents EP 1 393 245 et US 5,317,330. Dans ces documents, il est proposé que les transpondeurs reçoivent un signal d'interrogation ou un signal d'activation à une première fréquence, en particulier à basse fréquence. Ce signal apporte l'énergie nécessaire au fonctionnement du transpondeur selon le fonctionnement connu des transpondeurs passifs. Contrairement à la première génération de système, les transpondeurs répondent en envoyant un signal de réponse à une deuxième fréquence différente de la première fréquence, cette deuxième fréquence étant de préférence supérieure à la première fréquence. Pour ce faire, le transpondeur passif ou dispositif d'identification électronique passif comprend généralement une deuxième antenne qui émet un signal à la deuxième fréquence en utilisant l'énergie reçue par une première antenne accordée à ladite première fréquence.

Une variante d'un tel système est décrite dans la demande de brevet WO 2001/095242. Selon l'enseignement de ce document une source d'énergie transmet un signal d'alimentation à une première fréquence, mais la communication entre un lecteur et le transpondeur est effectuée à une autre fréquence.

Un système selon la nouvelle génération présente plusieurs avantages. En éloignant la fréquence d'activation ou de communication du lecteur en direction du transpondeur et la fréquence de réponse de ce transpondeur en direction du lecteur, on peut obtenir une meilleure sensibilité à la réception à l'aide d'un filtrage relativement peu complexe. Ceci permet en outre d'augmenter la distance de communication, laquelle peut encore être augmentée par une augmentation de la puissance d'émission du lecteur. En effet, premièrement l'antenne émettrice du lecteur ne sert plus à la réception et au décodage des signaux de réponse. Ainsi, le niveau d'émission n'a quasi aucune répercussion sur la sensibilité à la réception des signaux de réponse à la deuxième fréquence différente. Ensuite, l'envoi de l'énergie d'activation à relativement basse fréquence est avantageux car l'atténuation en fonction de l'éloignement est supérieure à basse fréquence. Ceci permet donc de prévoir une puissance d'émission relativement élevée pour une puissance de référence mesurée à dix mètres du lecteur comme décrit dans les normes d'homologation radio.

De plus, l'envoi de réponses des transpondeurs à une deuxième fréquence supérieure, par exemple située entre 1 et 50 MHz, permet un transfert de données plus rapide. Ceci est important pour l'efficacité d'un protocole d'anticollision en présence d'un grand nombre de transpondeurs dans le champ d'interrogation du lecteur. Finalement, un signal de réponse fourni par le transpondeur à une fréquence plus élevée augmente la distance de communication entre le transpondeur et le lecteur pour une puissance d'émission donnée. Ce dernier fait est important car le transpondeur dispose d'une puissance d'émission relativement faible.

On mentionnera encore un système particulier décrit dans la demande de brevet WO 2004/015625 qui concerne un système lecteur-transpondeur pouvant communiquer à deux fréquences différentes en fonction de la distance de communication ou de la nature de la commande / de l'opération prévue (lecture de données ou écriture de données dans le transpondeur). Ainsi, chaque fréquence est associée à une communication spécifique ou à une opération particulière.

La nouvelle génération de système d'identification susmentionnée permet notamment d'identifier des animaux en groupe, lors du passage par un portail ou en entrée/sortie d'un moyen de transport de ces animaux. Toutefois, bien que la nouvelle génération soit fonctionnelle et proposée depuis un certain temps sur le marché, elle peine à s'imposer étant donné que plusieurs producteurs ou distributeurs sont équipés avec l'ancien système fonctionnant à une seule basse fréquence. En s'équipant avec la nouvelle génération, un producteur ou distributeur ne peut plus utiliser son système selon l'ancienne génération. De plus, il n'est pas compatible avec des transpondeurs encore associés à l'ancien système et utilisés dans la chaîne de production animalière. Cette situation pose donc un problème auquel la présente invention se propose d'apporter une solution économique.

L'invention concerne un dispositif d'identification électronique ou transpondeur comprenant:
- un circuit d'activation de ce transpondeur associé à des moyens de réception d'un signal d'interrogation envoyé à une première fréquence par un lecteur, ce circuit d'activation étant agencé pour convertir le signal d'interrogation reçu en alimentation électrique du dispositif d'identification ou transpondeur;
- des premiers moyens électroniques de réponse associés à des moyens d'émission d'un premier signal de réponse à une deuxième fréquence supérieure à ladite première fréquence, ces premiers moyens électroniques de réponse et ces moyens d'émission d'un premier signal de réponse étant agencés pour répondre à un premier lecteur d'un premier type ;
ce dispositif ou transpondeur étant **caractérisé en ce qu**'il comprend en outre des deuxièmes moyens électroniques de réponse associés à des moyens d'émission d'un deuxième signal de réponse modulant ledit signal d'interrogation à ladite première fréquence, ces deuxièmes moyens électroniques de réponse et ces moyens d'émission d'un deuxième signal de réponse étant agencés pour répondre à un deuxième lecteur d'un deuxième type.

Le dispositif d'identification électronique selon l'invention présente l'avantage majeur de pouvoir fonctionner aussi bien avec des lecteurs de l'ancienne génération qu'avec des lecteurs de la nouvelle génération fonctionnant à deux fréquences différentes, comme décrit dans la partie introductive de la présente description de l'invention. Le dispositif d'identification selon l'invention reçoit un signal d'interrogation à une première fréquence pour activer ce dispositif et lui fournir l'énergie nécessaire à son fonctionnement. Ensuite, il comprend des premiers moyens de réponse associés à des moyens d'émission d'un signal de réponse à une deuxième fréquence supérieure à la première fréquence selon les caractéristiques de la nouvelle génération de système. En plus, pour rester compatible avec l'ancienne génération de système mono fréquence, le dispositif selon l'invention est équipé de deuxièmes moyens électroniques de réponse associés à des moyens d'émission d'un signal de réponse sur une porteuse à la première fréquence, cette porteuse étant fournie par le lecteur. Dans la suite du texte, on parlera de signal de réponse à la première fréquence pour caractériser ce signal de réponse modulant le signal d'activation.

Selon diverses variantes de réalisation, le signal de réponse à la première fréquence et le signal de réponse à la deuxième fréquence peuvent être envoyés simultanément ou à la suite l'un de l'autre. Ils peuvent également être envoyé en alternance. De plus, chacun de ces deux signaux de réponse peut être envoyé selon un protocole d'anticollision. Il est possible dans un mode de réalisation préféré de prévoir un seul protocole d'anticollision gérant l'envoi des deux signaux de réponse. De nombreuses possibilités s'offrent à l'homme du métier pour gérer l'envoi des signaux de réponse à la première fréquence et à la deuxième fréquence.

Selon des modes de réalisation plus évolués, le dispositif d'identification selon l'invention comprend également des moyens de démodulation du signal d'interrogation reçu à la première fréquence pour recevoir soit des commandes, soit des données à enregistrer. Dans un autre mode de réalisation, il est prévu que des commandes ou données sont fournies par le lecteur à la deuxième fréquence supérieure de sorte que le transpondeur peut recevoir des commandes ou des données seulement en fonctionnant avec un lecteur de la nouvelle génération, c'est-à-dire fonctionnant à deux fréquences différentes et équipé de deux antennes.

La présente invention sera décrite ci-après de manière plus détaillée en référence aux dessins, donnés à titre d'exemples nullement limitatifs, dans lesquels:
- la figure 1 représente schématiquement un premier mode de réalisation de l'invention;
- la figure 2 montre un exemple pour un protocole d'anticollision pour les deux signaux de réponse envoyés par chaque transpondeur.
- la figure 3 représente schématiquement un deuxième mode de réalisation de l'invention;
- la figure 4 représente schématiquement un troisième mode de réalisation de l'invention; et
- la figure 5 montre un schéma électronique plus détaillé d'un transpondeur selon un quatrième mode de réalisation.

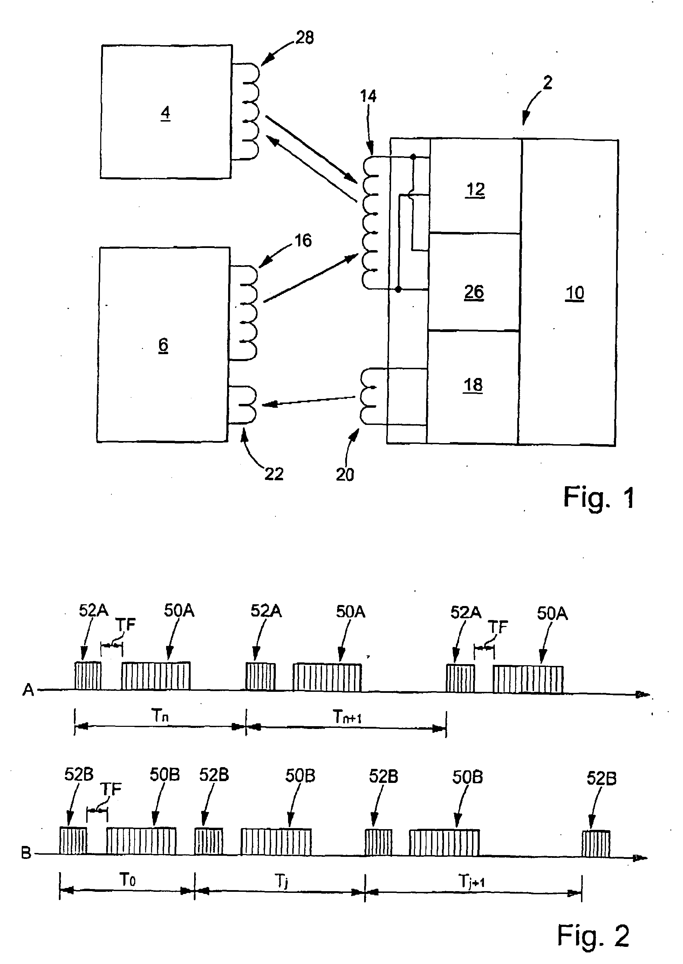

A la figure 1 est représenté un premier mode de réalisation d'un système d'identification d'objets, d'animaux ou de personnes selon l'invention. Plus précisément, la figure 1 montre schématiquement un dispositif d'identification électronique 2 ou transpondeur agencé de manière à être compatible avec un premier lecteur 4 fonctionnant à une seule fréquence et également avec un deuxième lecteur 6 fonctionnant à deux fréquences différentes. Comme exposé précédemment, le lecteur 4 appartient à un système d'identification d'une première génération alors que le lecteur 6 appartient à un autre système d'identification d'une deuxième génération plus récente. Le dispositif 2 comprend, comme tout dispositif agencé pour fonctionner avec le lecteur double fréquence 6. un circuit électronique et logique 10 et un circuit d'activation 12 de ce transpondeur 2 associé à des moyens de réception 14 d'un signal d'interrogation envoyé à une première fréquence, notamment à 125 kHz, par le lecteur 6 via l'antenne 16. Les moyens de réception 14 comprennent une première antenne accordée à ladite première fréquence. Le circuit d'activation 12 est agencé pour convertir le signal d'interrogation reçu par l'antenne 14 en alimentation électrique du transpondeur 2. Ensuite, ce transpondeur comprend des premiers moyens électroniques de réponse 18 associés à des moyens d'émission 20 d'un premier signal de réponse émit à une deuxième fréquence supérieure à la première fréquence. Les moyens d'émission 20 sont formés par une antenne accordée à ladite deuxième fréquence. Le transpondeur 2 est agencé de manière que le premier signal de réponse émit soit reçu par l'antenne 22 du lecteur 6, cette antenne 22 étant également accordée à la deuxième fréquence. Le lecteur 6 comprend des moyens pour décoder le signal de réponse reçu.

Selon l'invention, de manière que le transpondeur 2 puisse également être fonctionnel avec le lecteur 4 de la première génération de système d'identification, il comprend en outre des deuxièmes moyens électroniques de réponse 26 associés à des moyens d'émission 14 d'un deuxième signal de réponse à sensiblement ladite première fréquence. Le transpondeur 2 est agencé de manière que ce deuxième signal de réponse puisse être reçu par l'antenne 28 du lecteur 4, ce lecteur comprenant des moyens pour décoder le deuxième signal de réponse. Grâce à cet agencement, le transpondeur 2 est capable de communiquer avec le premier lecteur 4 dans un système selon la première génération et également avec le lecteur 6 dans un système selon la deuxième génération. Le transpondeur 2 est donc polyvalent et il est conçu de manière à ne pas être dédicacé à un seul système d'identification.

La première fréquence est par exemple égale à 125 kHz, alors que la deuxième fréquence est par exemple égale à environ 6,8 MHz ou 13,56 MHz.

Sur les figures, les flèches avec un trait gras représentent un signal d'activation fournissant l'énergie nécessaire au fonctionnement du transpondeur, alors que les flèches avec un trait fin indiquent une communication avec des signaux codés.

A l'aide de la figure 2 on décrira ci-après une variante de fonctionnement du dispositif d'identification 2 décrit à la figure 1. Dans cette variante, le système d'identification selon la première génération auquel le lecteur 4 est associé fonctionne de la manière suivante: le lecteur 4 envoie un signal d'interrogation ou d'activation et tous les transpondeurs associés à ce système et présents dans le champ d'interrogation ou d'activation du lecteur 4 répondent en envoyant un code d'identification de manière répétitive à intervalles de temps variables et aléatoires (par aléatoire on comprend également une génération d'intervalles de temps pseudo aléatoires ou quasi aléatoires étant donné que les moyens de génération peuvent conserver un certain déterminisme). Le système selon la deuxième génération auquel est associé le lecteur 6 fonctionne de manière similaire en utilisant deux fréquences différentes. Dans ce deuxième système, le lecteur 6 envoie un signal d'interrogation ou d'activation à la première fréquence inférieure qui active le transpondeur 2. En réponse à cette activation, le transpondeur envoie un signal de réponse à la deuxième fréquence supérieure, de manière répétitive et à intervalles de temps variables et aléatoires. Ainsi, les deux systèmes concernés par la variante décrite ici fonctionnent sur la base d'une réponse automatique suite à une activation du transpondeur qui communique son code d'identification dès qu'il est activé. Les deux systèmes fonctionnent donc selon un protocole d'anticollision permettant de détecter plusieurs transpondeurs groupés présents dans le champ d'interrogation du lecteur, ce protocole étant basé sur la génération d'intervalles aléatoires relativement longs entre les signaux de réponse envoyés de manière répétitive.

A la figure 2 sont représentés les deux signaux de réponse émis par un premier transpondeur A et par un deuxième transpondeur B situés dans le champ d'interrogation de l'un ou l'autre des deux lecteurs 4 et 6. Le circuit électronique et logique 10 du transpondeur 2 est agencé de manière à envoyer alternativement le premier signal de réponse à basse fréquence et le deuxième signal de réponse à haute fréquence. Dans la variante décrite ici, il est prévu pour les deux signaux de réponse un même protocole d'anticollision. Ainsi, l'intervalle de temps de longueur variable et aléatoire entre deux signaux de réponse à haute fréquence correspond également à l'intervalle de temps entre deux signaux de réponse à basse fréquence envoyés respectivement à la suite des deux signaux de réponse à haute fréquence susmentionnés- Comme représenté à la figure 2, les signaux de réponse à haute fréquence 52A pour le transpondeur A et 52B pour le transpondeur B sont émis pour une durée limitée à intervalle de temps variable Tn, respectivement Tj. Après chaque signal de réponse à haute fréquence 52A, 52B est émis un signal de réponse à basse fréquence 50A, respectivement 50B- Entre la fin de l'émission du signal de réponse à haute fréquence et le début d'émission du signal de réponse à basse fréquence est prévu une durée fixe TF. On notera que cette durée fixe peut être relativement courte, voire quasi nulle.

Etant donné l'envoi en alternance des deux signaux de réponse, l'intervalle de temps entre le début d'émission de deux signaux de réponse successifs à haute fréquence ou à basse fréquence est prévu supérieur ou égal à une durée minimale T0. Ceci n'est pas une condition nécessaire à tous les modes de mise en oeuvre d'un protocole d'anticollision, mais concerne la variante décrite ici ou les deux signaux de réponse sont envoyés alternativement et successivement, c'est-à-dire sans que l'envoi des deux signaux de réponse soit au moins partiellement simultanés.

On notera que les périodes séparant l'envoi des signaux à basse fréquence sont avantageuses pour permettre au transpondeur 2 de recevoir suffisamment d'énergie du signal d'interrogation via l'antenne 14 qui, dans le mode de réalisation décrit à la figure 1, sert également à l'envoi du signal de réponse à basse fréquence.

Dans le cas représenté à la figure 2, les premiers signaux envoyés à haute fréquence et également les premiers signaux envoyés à basse fréquence par les deux transpondeurs A et B sont superposés et engendrent donc des collisions. Par contre, les deuxièmes signaux de réponse à haute fréquence ne sont pas superposés de sorte que l'identification des transpondeurs A et B par un lecteur double-fréquence 6 est effectuée. Toutefois, concernant l'envoi des deuxièmes signaux de réponse à basse fréquence, il reste une certaine partie superposée. On peut ici concevoir deux cas. Dans un premier cas où le code d'identification est envoyé une seule fois dans chaque signal de réponse à basse fréquence, il y aura collision également pour ces deuxièmes signaux à basse fréquence. Dans un deuxième cas où chaque signal de réponse 50A, respectivement 50B comprend l'envoi répété du code d'identification, par exemple trois fois, les transpondeurs A et B peuvent être identifiés par un lecteur 4 malgré la superposition partielle des signaux de réponse 50A et 50B. Dans les deux cas, les lecteurs 4 et 6 pourront identifier individuellement les transpondeurs A et B lors de l'envoi des troisièmes signaux de réponse à haute fréquence et des troisièmes signaux de réponse à basse fréquence.

Le premier signal de réponse et le deuxième signal de réponse comprennent chacun un code d'identification du transpondeur. Dans une variante, le contenu de ces deux signaux de réponse est identique.

Bien que la variante décrite à l'aide de la figure 2 soit avantageuse et préférée, d'autres variantes pour la gestion des réponses à basse fréquence et à haute fréquence peuvent être prévues par l'homme du métier. On peux ainsi prévoir d'envoyer le signal à basse fréquence de manière répétitive, à intervalles de temps réguliers ou même de manière quasi continue. Dans un tel cas, l'envoi du signal de réponse à haute fréquence peut être fait de manière semblable à la variante décrite à la figure 2, c'est-à-dire selon un protocole d'anticollision avec intervalles temporels variables et aléatoires. Dans une autre variante, on peut envisager que le signal de réponse à basse fréquence soit envoyé selon un propre protocole d'anticollision, c'est-à-dire avec sa propre distribution aléatoire pour les intervalles temporels séparant l'envoi de ces signaux de réponse. Ensuite, évidemment, chaque signal de réponse peut contenir un code d'identification et éventuellement d'autres informations. Comme déjà mentionné, le code d'identification peut être transmis une seule fois dans chaque signal de réponse ou plusieurs fois, par exemple trois fois.

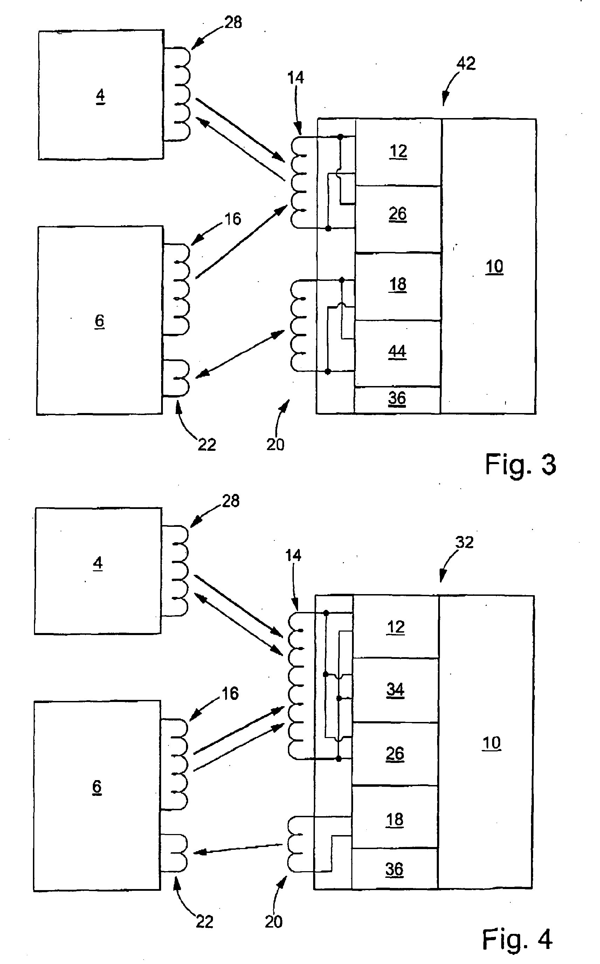

A l'aide de la figure 3, on décrira schématiquement un deuxième mode de réalisation d'un dispositif d'identification ou transpondeur 42 selon l'invention. Les références déjà décrites précédemment ne seront pas décrites ici à nouveau en détail. Ce deuxième mode de réalisation se distingue du premier mode de réalisation essentiellement par le fait qu'il comprend en outre des moyens de réception 44 de commandes ou de données reliés à l'antenne 20 pour la réception d'un signal à la deuxième fréquence, notamment à haute fréquence. De plus, le dispositif d'identification 42 comprend une mémoire EEPROM 36. Les moyens de réception 44 de signaux à la deuxième fréquence comprennent de manière classique un démodulateur permettant de décoder les informations codées dans le signal reçu par un lecteur 6 via son antenne 22 accordée à la deuxième fréquence. Ce mode de réalisation permet ainsi au transpondeur 42 de recevoir des informations du lecteur et notamment de pouvoir écrire certaines données dans sa mémoire 36. Cet agencement permet également de gérer un protocole d'anticollision dans lequel le lecteur 6 envoie certaines commandes pour gérer ce protocole.

A la figure 4 est représenté schématiquement un troisième mode de réalisation d'un dispositif d'identification ou transpondeur 32. Les références déjà décrites précédemment ne seront pas à nouveau décrites ici en détail. Ce troisième mode de réalisation se distingue essentiellement du premier mode de réalisation décrit par le fait qu'il comprend en outre des moyens de réception 34 de signaux . électromagnétiques codés à la première fréquence, via l'antenne 14. Ces moyens de réception 34 comprennent de manière classique un démodulateur permettant d'extraire des informations contenues dans le signal d'interrogation à la première fréquence servant également à l'alimentation du transpondeur.

Dans le troisième mode de réalisation de la figure 4, on a ainsi une communication bidirectionnelle à la première fréquence et une communication unidirectionnelle à la deuxième fréquence du transpondeur 32 en direction du lecteur 6. Comme dans le deuxième mode de réalisation, le transpondeur 32 peut recevoir des données et/ou des commandes de la part d'un lecteur, mais dans ce cas-ci les informations envoyées du lecteur au transpondeur sont effectuées à la première fréquence. Il est ainsi possible d'écrire des données dans la mémoire 36 du transpondeur 32.

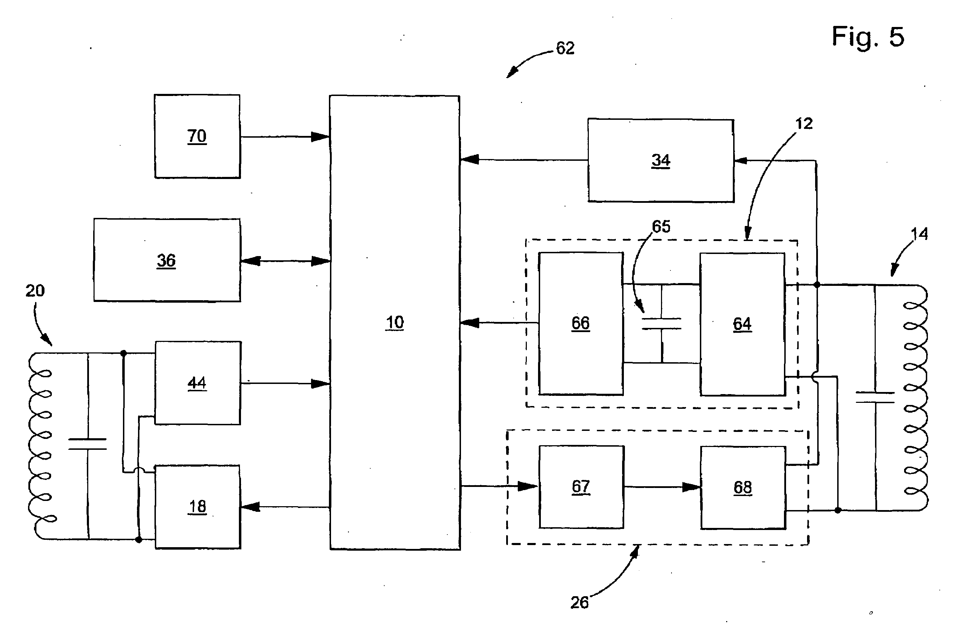

Un quatrième mode de réalisation est représenté à la figure 5- Dans ce dernier mode de réalisation, une communication bidirectionnelle entre un lecteur et un transpondeur est prévue à la première fréquence et également à la deuxième fréquence.

Il se distingue ainsi du troisième mode de réalisation par le fait qu'il comprend en outre des moyens de réception de signaux électromagnétiques codés, envoyés à sensiblement ladite deuxième fréquence.

Le dispositif d'identification ou transpondeur 62 comprend une antenne 14 accordée à une première fréquence. Il comprend un circuit logique 10 cadencé par un signal fourni par l'oscillateur 70. Le circuit d'activation 12 est formé par un redresseur 64 qui charge une capacité d'alimentation 65. La gestion de la tension d'alimentation et l'activation du transpondeur sont assurées par l'unité de gestion 66 qui envoie un signal d'activation au circuit logique 10 lorsque la tension d'alimentation à disposition est suffisante au fonctionnement du transpondeur. Le transpondeur comprend ensuite un circuit 34 de démodulation de signaux codés susceptibles d'être reçus par l'antenne 14, ainsi qu'un circuit de modulation 26 selon l'invention pour transmettre un signal de réponse au lecteur via l'antenne 14, en modulant la porteuse du signal d'interrogation ou d'activation reçu par cette antenne 14. Le circuit 26 est formé d'un codeur 67 de données à basse fréquence et d'un modulateur 68 qui le succède. Le circuit 10 est associé à une mémoire EEPROM 36.

Le transpondeur 62 comprend également un circuit 18 d'émission de signaux de réponse à une deuxième fréquence supérieure via l'antenne 20.

Finalement, ce transpondeur comprend en outre un circuit 44 de démodulation de signaux codés susceptibles d'être reçus par l'antenne 20 à sensiblement ladite deuxième fréquence.

## Revendications

1. Dispositif d'identification électronique ou transpondeur comprenant:
- un circuit d'activation (12) associé à des moyens de réception (14) d'un signal d'interrogation envoyé à une première fréquence par un lecteur (4; 6), ce circuit d'activation étant agencé pour convertir ledit signal d'interrogation reçu en alimentation électrique du dispositif d'identification ou transpondeur;
- des premiers moyens électroniques de réponse (18) associés à des moyens d'émission (20) d'un premier signal de réponse à une deuxième fréquence supérieure à ladite première fréquence, ces premiers moyens électroniques de réponse et ces moyens d'émission d'un premier signal de réponse étant agencés pour répondre à un premier lecteur d'un premier type;
**caractérisé en ce qu'**il comprend en outre des deuxièmes moyens électroniques de réponse (26) associés à des moyens d'émission (14) d'un deuxième signal de réponse modulant ledit signal d'interrogation, ces deuxièmes moyens électroniques de réponse et ces moyens d'émission d'un deuxième signal de réponse étant agencés pour répondre à un deuxième lecteur d'un deuxième type.

2. Dispositif d'identification ou transpondeur selon la revendication 1, **caractérisé en ce qu'**il comprend en outre des premiers moyens de réception (34) de signaux électromagnétiques codés, envoyés à ladite première fréquence.

3. Dispositif d'identification ou transpondeur selon la revendication 1 ou 2, **caractérisé en ce qu'**il comprend en outre des deuxièmes moyens de réception (44) de signaux électromagnétiques codés, envoyés à sensiblement ladite deuxième fréquence.

4. Dispositif d'identification ou transpondeur selon l'une des revendications précédentes, **caractérisé en ce qu'**il est agencé pour fournir au moins un code d'identification, après être activé par la réception dudit signal d'interrogation, en émettant alternativement ledit premier signal de réponse et ledit deuxième signal de réponse qui comprennent chacun ledit code d'identification.

5. Dispositif d'identification ou transpondeur selon la revendication 4, **caractérisé en ce qu'**au moins ledit deuxième signal est envoyé périodiquement avec des intervalles de temps variables et de préférence aléatoires.

6. Dispositif d'identification ou transpondeur selon la revendication 5, **caractérisé en ce que** ledit premier signal est envoyé à la suite dudit deuxième signal après une durée fixe et de préférence relativement courte.

## Claims

1. Electronic identification device or transponder comprising:
- a trigger circuit (12) linked to receiving means (14) of an interrogation signal sent at a first frequency by a reader (4; 6), this trigger circuit being configured to convert said received interrogation signal into electric power supply of the identification device or transponder;
- first electronic response means (18) linked to means (20) for emitting a first response signal at a second frequency higher than said first frequency these first electronic response means and these means for emitting a first response signal being arranged for responding to a first reader of a first type;
**characterised in that** it additionally comprises second electronic response means (26) linked to means (14) for emitting a second response signal modulating said interrogation signal, these second electronic response means and these means for emitting a second response signal being arranged for responding to a second reader of a second type.

2. Identification device or transponder according to claim 1, **characterised in that** it additionally comprises first receiving means (34) of coded electromagnetic signals sent at said first frequency.

3. Identification device or transponder according to claim 1 or 2, **characterised in that** it additionally comprises second receiving means (44) of coded electromagnetic signals sent at approximately said second frequency.

4. Identification device or transponder according to any one of the preceding claims, **characterised in that** it is configured to supply at least one identification code after being activated by the receipt of said interrogation signal, by emitting in turn said first response signal and said second response signal, which each include said identification code.

5. Identification device or transponder according to claim 4, **characterised in that** at least said second signal is sent periodically at variable, and preferably random, time intervals.

6. Identification device or transponder according to claim 5, **characterised in that** said first signal is sent subsequent to said second signal after a fixed, and preferably relatively short period.

## Patentansprüche

1. Elektronische Identifizierungsvorrichtung oder Transponder, mit:
- einer Aktivierungsschaltung (12), der Empfangsmittel (14) für ein Abfragesignal, das mit einer einer ersten Frequenz von einer Leseeinrichtung (4; 6) geschickt wird, zugeordnet sind, wobei diese Aktivierungsschaltung dazu ausgelegt ist, das empfangene Abfragesignal in eine Stromzufuhr der Identifizierungsvorrichtung oder des Transponders umzusetzen;
- ersten elektronischen Antwortmitteln (18), denen Sendemittel (20) für ein erstes Antwortsignal mit einer zweiten Frequenz, die höher als die erste Frequenz ist, zugeordnet sind, wobei diese ersten elektronischen Antwortmittel und diese Mittel zum Senden eines ersten Antwortsignals dazu ausgelegt sind, auf eine erste Leseeinrichtung eines ersten Typs zu antworten;
**dadurch gekennzeichnet, dass** sie außerdem zweite elektronische Antwortmittel (26) umfasst, denen Sendemittel (14) für ein zweites Antwortsignal, das das Abfragesignal moduliert, zugeordnet sind, wobei diese zweiten elektronischen Antwortmittel und diese Mittel zum Senden eines zweiten Antwortsignals dazu ausgelegt sind, auf eine zweite Leseeinrichtung eines zweiten Typs zu antworten.

2. Identifizierungsvorrichtung oder Transponder nach Anspruch 1, **dadurch gekennzeichnet, dass** sie außerdem erste Mittel (34) zum Empfangen codierter elektromagnetischer Signale, die mit der ersten Frequenz gesendet werden, umfasst.

3. Identifizierungsvorrichtung oder Transponder nach Anspruch 1 oder 2, **dadurch gekennzeichnet, dass** sie außerdem zweite Mittel (44) zum Empfangen codierter elektromagnetischer Signale, die im Wesentlichen mit der zweiten Frequenz gesendet werden, umfasst.

4. Identfizierungsvorrichtung oder Transponder nach einem der vorhergehenden Ansprüche, **dadurch gekennzeichnet, dass** sie dazu ausgelegt ist, wenigstens einen Identifizierungscode zu liefern, nachdem sie durch den Empfang des Abfragesignals aktiviert worden ist, indem sie abwechselnd das erste Antwortsignal und das zweite Antwortsignal, die jeweils den Identifizierungscode enthalten, aussendet.

5. Identifizierungsvorrichtung oder Transponder nach Anspruch 4, **dadurch gekennzeichnet, dass** wenigstens das zweite Signal periodisch in veränderlichen und vorzugsweise zufälligen Zeitintervallen geschickt wird.

6. Identifizierungsvorrichtung oder Transponder nach Anspruch 5, **dadurch gekennzeichnet, dass** das erste Signal nach dem zweiten Signal nach einer festen und vorzugsweise verhältnismäßig kurzen Dauer geschickt wird.
